# EUROPÄISCHE PATENTSCHRIFT

(11) **EP 4 367 412 B1**
(45) Veröffentlichungstag und Bekanntmachung des Hinweises auf die Patenterteilung: **06.05.2026**
(21) Anmeldenummer: 21743418.2
(22) Anmeldetag: 09.07.2021
(51) Int. Cl.: F16C 17/02, F16C 33/14, F16C 33/04

(54) **VERFAHREN ZUR HERSTELLUNG EINES BAUTEILS SOWIE BAUTEIL**
METHOD FOR PRODUCING A PART, AND PART
PROCÉDÉ DE FABRICATION D'UN COMPOSANT ET COMPOSANT CORRESPONDANT

(43) Veröffentlichungstag der Anmeldung: 15.05.2024
(73) Patentinhaber: Schunk Kohlenstofftechnik GmbH, 35452 Heuchelheim (DE); Schunk Sintermetalltechnik GmbH, 35452 Heuchelheim (DE); Schunk Sintermetalltechnik GmbH Thale, 06502 Thale (DE)
(72) Erfinder: KIENHOLZ, Matthias, 35452 Heuchelheim (DE); LESCH, Bernd, 06484 Quedlinburg (DE); WITT, Alexander, 06493 Ballenstedt (DE); VOORMANN, Hauke, 35440 Linden (DE); PRÜFERT, Lukas, 35444 Biebertal (DE); OTT, Jonas, 35647 Waldsolms (DE); NEUSER, Ulrich, 35398 Gießen (DE)
(74) Vertreter: Stoffregen, Hans-Herbert
(86) Internationale Anmeldenummer: PCT/EP2021/069148
(87) Internationale Veröffentlichungsnummer: WO 2023/280422

(56) Entgegenhaltungen:
- US-A1- 2019 226 525

## Beschreibung

Die Erfindung bezieht sich auf ein Verfahren zur Herstellung eines Bauteils, insbesondere drehsymmetrisches Bauteil, wie Lager, Gleitlager, Zahnrad, Ritzel, Riemenrad, Pumpenrad, oder eines Bauteils mit linearer oder anders geformter Gleitfläche, mit einem Funktionsbereich, insbesondere einem tribologisch, thermisch und/oder mechanisch zu beanspruchenden Bereich, umfassend eine erste Bauteilkomponente aus einem metallischen ersten Werkstoff und eine zweite Bauteilkomponente aus einem aus Kohlenstoff bestehenden oder enthaltenden zweiten Werkstoff, mit den Verfahrensschritten
- Herstellen der ersten Bauteilkomponente mit zumindest einer in dem Funktionsbereich ausgebildeten Aufnahme,
- Herstellen der zweiten Bauteilkomponente durch Spritzgießen des zweiten Werkstoffs zumindest in die zumindest eine Aufnahme.

Auch nimmt die Erfindung Bezug auf ein Bauteil, insbesondere drehsymmetrisches Bauteil, wie Lager, Gleitlager, Zahnrad, Ritzel, Riemenräder, Pumpenräder, oder ein Bauteil mit linearer oder anders geformter Gleitfläche. mit zumindest einem Funktionsbereich, insbesondere mit einem tribologisch, thermisch und/oder mechanisch zu beanspruchendem Bereich, wie Lager, wobei das Bauteil einen ersten Bauteilkörper aus einem metallischen ersten Werkstoff und einen zweiten Bauteilkörper aus einem kohlenstoffhaltigen oder kohlenstoffbasierten zweiten Werkstoff aufweist oder aus diesem besteht, wobei der erste Bauteilkörper in dem Funktionsbereich zumindest eine zumindest eine Hinterschneidung aufweisende Ausnehmung aufweist, die von dem zweiten Bauteilkörper mittels Spritzgießen ausgefüllt ist.

Gleitlager kommen z.B. im klassischen Pumpenbau, in der chemischen Industrie, im Lebensmittel-, Pharmazie- oder Kosmetikbereich, aber auch in der Automobilindustrie oder der Luftfahrtechnik oder bei der Temperaturbehandlung von Gegenständen zum Einsatz. Dabei können entsprechende Bauteile aus Graphit, Kohlenstoff, Hochleistungspolymeren oder Siliziumcarbid (SiC) bestehen, um nur beispielhaft einige Werkstoffe zu nennen.

Auch ist es bekannt, tribologischen, mechanischen und thermischen Belastungen ausgesetzte Bauteile als Hybridbauteile auszubilden, die aus einer ersten Bauteilkomponente aus einem metallischen Werkstoff und einer zweiten Bauteilkomponente aus einem kohlenstoffbasierten Werkstoff besteht. Dabei wird die aus kohlenstoffbasiertem Werkstoff bestehende Komponenten in Ausnehmungen der ersten Komponente durch z.B. Schrumpfen oder Pressen eingebracht. Insoweit ist z.B. auf die WO 2021/047784 A1 zu verweisen.

Durch den Schrumpf- bzw. Pressprozess sind häufig verfahrenstechnisch anspruchsvolle bzw. aufwendige Verfahrensmaßnahmen erforderlich, die zu einer zusätzlichen Kostenbelastung führt. Nachteilig kann auch sein, dass die zweiten Komponenten, zu deren Sicherung, in Aufnahmen eingesetzt werden müssen, die als Durchgangsöffnungen ausgebildet sind, so dass sowohl Innen- als auch Außenfläche der ersten Komponente unterbrochen ist. Hierdurch kann gegebenenfalls die mechanische Belastbarkeit limitiert sein. Unabhängig hiervon sind durch die Verfahrensschritte Einpressen bzw. Einschrumpfen in Bezug auf die Geometrie der zweiten Komponente und damit der diese aufnehmende Ausnehmung Einschränkungen in Kauf zu nehmen bzw. bei hohen Fliehkräften ausgesetzten Bauteilen nur spezielle Geometrien möglich.

Aus der US 2019/0226525 A1 ist ein Gleitelement mit Ausnehmungen bekannt, in die durch Spritzgießen ein Gleitmittel eingebracht ist. Die Ausnehmungen selbst weisen Hinterschneidungen auf.

Aufgabe der vorliegenden Erfindung ist es, ein Verfahren und ein Bauteil der eingangs genannten Art so weiterzubilden, dass im Vergleich zum Stand der Technik eine Vereinfachung bei der Herstellung gegeben ist. Auch soll ein entsprechendes Bauteil Vorteile in der Anwendung zeigen.

Nach einem weiteren Aspekt soll die Möglichkeit gegeben sein, in Abhängigkeit vom Einsatzzweck des ersten Bauteils eine optimal angepasste Geometrie des zweiten Bauteils zu wählen, ohne dass Einbußen in Bezug auf die mechanische Belastbarkeit der ersten Komponente in Kauf genommen werden müssen bzw. diese gegebenenfalls überdimensioniert sein muss.

Zur Lösung der Aufgabe wird im Wesentlichen vorgeschlagen, dass die zumindest eine Aufnahme derart ausgebildet wird, dass die Breite entlang der Längsachse variiert, oder dass die Aufnahmen durch schräg verlaufende Stege begrenzt werden und in Umfangsrichtung abwechselnd gleichläufig geneigt zur Längsachse des Bauteils verlaufen, so dass sich zwischen den Aufnahmen der durch Spritzen eingebrachte zweite Werkstoff erstreckt, der zur Oberfläche hin gleichfalls zur Längsachse des Bauteils schräg verlaufende Streifen ausbildet.

Die erste Bauteilkomponente kann durch Urformen, additiven Herstellungsprozess, Pressen, insbesondere axiales Pressen oder isostatisches Pressen, hergestellt werden.

Wird die erste Bauteilkomponente durch Pressen hergestellt, wird der Grünling zumindest gesintert. Ein Entbindern ist zuvor gleichfalls möglich.

Bevorzugterweise ist vorgesehen, dass die erste Bauteilkomponente durch Metallpulverspritzen und nach gegebenenfalls erfolgter Entbinderung anschließendes Sintern hergestellt wird.

Ist das Metallpulverspritzen als bevorzugt zu bezeichnen, so kann die metallische erste Bauteilkomponente grundsätzlich über jeden Ur- und Umformprozess hergestellt werden. So kann auch eine mechanische Bearbeitung aus dem Vollen oder ein Feinguss zur Herstellung der ersten Bauteilkomponente in Frage kommen.

Erfindungsgemäß wird im Vergleich zum Stand der Technik ein schlanker Herstellprozess genutzt, um ein Bauteil mit einem Funktionsbereich herzustellen, der insbesondere tribologisch beansprucht wird. Dabei werden technisch ausgereifte Herstellungsprozesse benutzt, insbesondere in Bezug auf das zweite Bauteil.

Gleiches gilt für das erste Bauteil, das in Spritzgießtechnik oder Presstechnik, aber auch durch additive Fertigung herstellt werden kann.

Aufgrund der erfindungsgemäßen Lehre wird mit dem Pulverspritzgießverfahren (MIM) oder Presstechnik, insbesondere axiale Presstechnik, die erste Bauteilkomponente hergestellt, die auch als Metallfassung bezeichnet werden kann. Dazu wird Metallpulver unter Hinzugabe von Additiven zu einem spritzgussfähigen oder pressfähigen Feedstock verarbeitet, gespritzt oder gepresst, entbindert (nur bei MIM) und gesintert. Ein fertiges stabiles Metallbauteil steht sodann zur Verfügung. Dieses Bauteil wird in einem zweiten Fertigungsschritt mit dem zweiten Werkstoff ausgespritzt, insbesondere Kohlenstoffspritzgussmasse /-material. In diesem Fall spricht man von einem Kohlenstoffspritzguss.

Es besteht die Möglichkeit, dann, wenn der Funktionsbereich innerhalb einer Innenfläche einer ersten Bauteilkomponente verläuft, die Außenfläche eines solchen geschlossen auszubilden, so dass sich eine hohe mechanische Belastbarkeit ergibt, auch ein problemloses Schweißen oder Löten oder eine sonstige Bearbeitung ist möglich. Dies kann insbesondere für Gleitlager von Vorteil sein.

Um ein sicheres Befestigen der zweiten Komponente in der ersten Komponente zu gewährleisten, sieht die Erfindung in Weiterbildung vor, dass die zumindest eine Aufnahme mit einer von einer Öffnung begrenzten Hinterschneidung zur Unverlierbarkeit der zweiten Bauteilkomponente ausgebildet wird.

Dabei ist besonderes zu bevorzugen, dass die Aufnahme mit einer Längsachse ausgebildet wird, dass die Aufnahme quer zur Längsachse eine schwalbenschwanzförmige Hinterschnittgeometrie mit einer Öffnung aufweist, die zumindest abschnittsweise kleiner als maximaler Querschnitt der Aufnahme ist, jeweils quer zu der Längsachse betrachtet.

Hervorzuheben ist des Weiteren, dass die Aufnahme derart ausgebildet wird, dass die Breite entlang der Längsachse insbesondere sich stetig verändert, d.h. zunimmt bzw. abnimmt.

Selbstverständlich ist von der Erfindung auch die Möglichkeit erfasst, dass die Breite gleichbleibt oder eine Helixform aufweist.

Die Aufnahme selbst kann auch in Form einer Helix oder von Schrägen dargestellt werden.

Dabei können mehrere Aufnahmen mit schwalbenschwanzförmiger Hinterschnittgeometrie ausgebildet werden, wobei benachbarte Aufnahmen derart ausgebildet werden, dass diese in ihrer jeweiligen Breite entgegengesetzt variieren.

Dadurch, dass die zweite Komponente in der Spritzgießtechnik urgeformt wird, ist es nicht erforderlich, dass vorgefertigte zweite Komponenten gesondert hergestellt und sodann gelagert werden müssen, bevor diese in die erste Bauteilkomponente eingesetzt bzw. eingepresst werden.

Durch den Einsatz zweier bekannter Techniken kann eine Hochautomatisierung erfolgen, die der Stand der Technik nicht kennt.

Insbesondere ist hervorzuheben, dass als der zweite Werkstoff ein kohlenstoffbasierter oder -haltiger Werkstoff verwendet wird.

Als zweiter Werkstoff kann aber auch ein spritzgussfähiger Kunststoff verwendet werden, der insbesondere gute Gleiteigenschaften besitzt. Beispielhaft sind zu nennen PA (Polyamid) oder PEEK (Polyetheretherketon) oder PTFE (Polytetrafluorethylen) oder PES (Polyethersulfon) oder PPS (Polyphenylinsulfid).

Die Erfindung zeichnet sich insbesondere auch dadurch aus, dass als der kohlenstoffbasierte oder -haltige Werkstoff ein mit Kohlenstoff gefüllter polymerer Werkstoff verwendet wird.

Bevorzugt sieht die Erfindung vor, dass als der zweite Werkstoff ein solcher verwendet wird, der einen Anteil an thermoplastischem Polymer von 30 Vol.-% bis < 60 Vol.-.% und einen Anteil an Kohlenstoff von > 40 Vol.-% bis 70 Vol.-% aufweist.

Dabei kann als Kohlenstoffwerkstoff Grafit, ein überwiegend kohlenstoffhaltiger Feststoff, Petrolkoks oder eine Mischung dieser Stoffe verwendet werden.

Eine weitere Möglichkeit sieht vor, dass als der zweite Werkstoff ein solcher verwendet wird, der frei von reinem Polytetrafluorethylen ist.

Insbesondere wird als der polymere Werkstoff ein solcher verwendet, der ein thermoplastisches Fluorpolymer aufweist.

Als polymerer Werkstoff wird, vorzugsweise ausschließlich, Ethylen-Tetrafluorethylen-Copolymer, oder Ethylen-Tetrafluorethylen-Copolymer und ein Hochtemperatur-Thermoplast, vorzugsweise Polyphenylensulfid, Polyetheretherketon, Polyethersulfon und/oder Polyamidimid, verwendet.

Es besteht jedoch auch die Möglichkeit, dass als polymerer Werkstoff, vorzugsweise ausschließlich, ein Hochtemperatur-Thermoplast, bevorzugt Polyphenylensulfid, Polyetheretherketon, Polyethersulfon oder Polyamidimid, verwendet wird.

In Bezug auf das erste Bauteil ist insbesondere vorgesehen, dass als metallischer erster Werkstoff ein solcher verwendet wird, der zumindest ein Metall aus der Gruppe Kupfer, Nickel, Chrom, Zinn, Eisen, Molybdän enthält.

Es besteht auch die Möglichkeit, dass als der zweite Werkstoff ein bebinderter Kohlenstoff verwendet wird oder diesen zumindest enthält.

Erfindungsgemäß kann vorgesehen sein, dass als bebinderter Kohlenstoff ein solcher verwendet wird, bei dem im Rohzustand als Kohlenstoffkomponente Koks und/oder Grafit und ein Bindemittel aus der Gruppe der Duromere und/oder Thermoplaste verwendet wird.

Es besteht die Möglichkeit, dass als Bindemittel für den kohlenstoffhaltigen bzw. - basierten Werkstoff zumindest ein duroplastisches Polymer verwendet wird.

Die Erfindung schließt auch ein, dass die erste Bauteilkomponente von der zweiten Bauteilkomponente zumindest teilweise umspritzt wird.

Die Erfindung bezieht sich auch auf ein Bauteil, wie Lager Gleitlager, Zahnrad, Ritzel, Riemenräder, Pumpenräder, oder ein Bauteil mit linearer oder anders geformter Gleitfläche mit zumindest einem Funktionsbereich, insbesondere mit tribologisch, thermisch und/oder mechanisch zu beanspruchenden Bereich, wobei das Bauteil einen ersten Bauteilkörper aus einem metallischen ersten Werkstoff und einen zweiten Bauteilkörper aus einem kohlenstoffhaltigen oder kohlenstoffbasierten zweiten Werkstoff aufweist oder aus diesem besteht, wobei der erste Bauteilkörper in dem Funktionsbereich zumindest eine zumindest eine Hinterschneidung aufweisende Ausnehmung aufweist, die von der zweiten Bauteilkomponente mittels Spritzgießen ausgefüllt ist, wobei sich das Bauteil dadurch auszeichnet, dass die zumindest eine Aufnahme in Achsrichtung des Bauteils in ihrer Breite variiert, oder dass die Aufnahmen durch schräg verlaufende Stege begrenzt sind und in Umfangsrichtung abwechselnd gleichläufig geneigt zur Längsachse des Bauteils verlaufen, so dass sich zwischen den Aufnahmen der durch Spritzen eingebrachte zweite Werkstoff erstreckt, der zur Oberfläche hin gleichfalls zur Längsachse des Bauteils schräg verlaufende Streifen ausbildet.

Nach dem Spritzgießen der zweiten Komponente kann eine thermische Nachbehandlung stattfinden.

Insbesondere besteht die Möglichkeit, dass in der ersten Bauteilkomponente mehrere mit der zweiten Bauteilkomponente ausgefüllte Aufnahmen vorgesehen sind.

Dabei kann der Funktionsbereich ein Abschnitt oder mehrere Abschnitte einer zu einer Achse rotationssymmetrisch verlaufenden Umhüllenden sein.

Die erfindungsgemäße Lehre schließt selbstverständlich auch ein, dass der Funktionsbereich in zumindest einer Stirnfläche des Bauteils oder auf zumindest einer Außenseite ausgebildet ist.

Bevorzugterweise ist vorgesehen, dass die zumindest eine Aufnahme in senkrecht zu der Achse verlaufendem Schnitt eine Schwalbenschwanzhinterschnittgeometrie aufweist.

Die zweite Komponente sollte durch den in mehrere Aufnahmen eingebrachten zweiten Werkstoff gebildet sein.

Bevorzugterweise sollten bei mehreren z. B. im Schnitt eine Schwalbenschwanzhinterschnittgeometrie aufweisenden Aufnahmen benachbarte Aufnahmen gegenläufig verlaufend variierende Breiten aufweisen.

Wird bevorzugt eine Schwalbenschwanzhinterschnittgeometrie angegeben, so ist hierdurch die erfindungsgemäße Lehre nicht beschränkt. Andere Hinterschnittgeometrien wie Konus, Kreisabschnitt sind gleichfalls möglich. Die erfindungsgemäße Lehre ist auf eine spezielle Hinterschnittgeometrie nicht eingeschränkt.

Unabhängig hiervon sollte vorgesehen sein, dass bei mehreren im Schnitt eine Schwalbenschwanzhinterschnittgeometrie aufweisenden Aufnahmen benachbarte Aufnahmen sich entlang einer oder der Achse konisch erweitern bzw. verjüngen.

Ferner sollte die zweite Bauteilkomponente oberflächenseitig bündig in angrenzenden Bereich der ersten Bauteilkomponente übergehen.

Die zweite Bauteilkomponente kann aber auch in Bezug auf den angrenzenden Oberflächenbereich der ersten Bauteilkomponente untermaßig oder übermaßig ausgebildet sein.

Das erfindungsgemäße Bauteil kann auch eine Komponente eines Gleitpaars, wie Pumpenwelle und Gleitlager, sein. Dabei besteht die Möglichkeit, jede der Gleitpaarkomponenten entsprechend der erfindungsgemäßen Lehre auszubilden.

Unabhängig hiervon ist der besondere Vorteil der erfindungsgemäßen Lehre darin zu sehen, dass zur Herstellung der zweiten Komponente ein Pulverspritzgießverfahren bzw. Kohlenstoffspritzguss eingesetzt wird, das problemlos beherrschbar ist. Dabei besteht die Möglichkeit, die zweite Komponente in Hinterschneidungen in der ersten Komponente aufweisende Aufnahmen einzubringen, so dass ein sicheres Halten der zweiten Komponente gewährleistet ist.

Ein Vorteil ist auch darin zu sehen, dass z.B. bei einem Gleitlager die Umfangsfläche als geschlossene Metallhülle ausgebildet sein kann, so dass durch die geschlossene Hülle optimale mechanische Eigenschaften erzielbar sind.

Wird die erste Komponente gleichfalls im Spritzgießverfahren, also Metallpulverspritzgießverfahren, hergestellt, können zwei hochautomatisierte Verfahren zur Herstellung des Bauteils zum Einsatz gelangen.

Wird die zweite Komponente in Aufnahmen mit Hinterschnittgeometrie durch Spritzengießen eingebracht, wobei benachbarte in Längsachsenrichtung des Bauteils verlaufenden Aufnahmen entgegensetzt variierende Breiten, insbesondere gegengleich, ausgebildet sind, ist der Vorteil gegeben, dass sich eine optimale Mischreibung zwischen Kohlenstoffmaterial und Metall ergeben kann.

Dabei ist bevorzugt vorgesehen, dass die Aufnahme eines schwalbenschwanzförmige Hinterschnittgeometrie aufweist. Entsprechende Vorteile können sich jedoch auch dann ergeben, wenn der Verlauf der Aufnahmen durch parallele Schrägen oder eine Helixform vorgegeben ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: ein Bauteil in Form eines Gleitlagers,
- Fig. 2: eine Prinzipdarstellung eines Gleitlagers im Schnitt,
- Fig. 3: eine Prinzipdarstellung einer Welle im Schnitt,
- Fig. 4: eine Prinzipdarstellung einer Gleitplatte im Schnitt,
- Fig. 5: eine Prinzipdarstellung eines Bauteils mit innen- und außenflächig vorhandenen Funktionsbereichen,
- Fig. 6: Prinzipdarstellungen von Hinterschneidungen,
- Fig. 7: einen ersten Verfahrensablauf zur Herstellung eines Bauteils,
- Fig. 8: einen zweiten Verfahrensablauf zur Herstellung eines Bauteils, und
- Fig. 9: Abwicklungen von Bauteilen.

Anhang der Fig. wird die erfindungsgemäße Lehre zur Herstellung eines Bauteils beschrieben, der zumindest einen Funktionsbereich aufweist, um mechanischen, thermischen und/oder insbesondere tribologischen Belastungen Stand zu halten, wie dies z.B. bei einem Gleitlager, einer Welle oder einem Zahnrad erforderlich ist.

Zur Herstellung eines entsprechenden Bauteils wird eine erste Komponente des Bauteils, das einen metallischen ersten Werkstoff, insbesondere ausgebildet aus der Gruppe, umfassend Kupfer, Nickel, Chrom, Eisen, Titan, Molybdän und Zink, als Basismaterial enthält, wird insbesondere Metallpulverspritzgießverfahren eingesetzt, wenngleich auch andere Herstellungsverfahren, wie additive Herstellung oder Pressen, insbesondere axiales Pressen, in Frage kommen.

Dem Grunde nach kommen alle Ur- und Umformprozesse in Frage, um die erste Komponente des Bauteils herzustellen. Dabei sind auch das mechanische Bearbeiten aus den Vollen, Feinguss oder die additive Fertigung zu nennen.

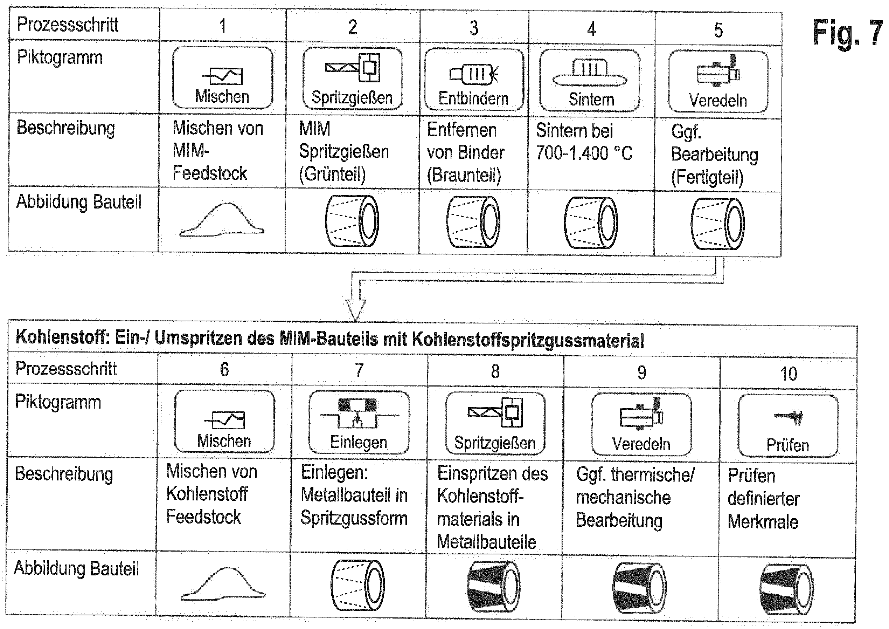

Anhand der Fig. 7 soll beispielhaft das erfindungsgemäße Verfahren erläutert werden, bei dem zur Herstellung der ersten Komponente des Bauteils das Metallpulverspritzgießverfahren (MIM) zur Anwendung gelangt.

So wird entsprechend in einem Verfahrensschritt 1 Metallpulver mit einem Binder zu einer homogenen Pulvermischung verknetet und erwärmt. Bei dem Metallpulver kann es sich um ein solches handeln, bei dem die numerische Partikelgrößenverteilung mit D₉₀ = 40 µm, insbesondere D₉₉ = 50 µm, beträgt. Dies bedeutet, dass anzahlmäßig 90 % der Partikel kleiner oder gleich 50 µm bzw. 99 % der Partikel kleiner oder gleich 40 µm sind.

Die Metallmischung, der Feedstock, sollte insbesondere 50 Gew.-% bis 80 Gew.-% Metallpulver bzw. Metalllegierungspulver und 20 Gew.-% bis 50 Gew.-% Binder enthalten.

Bei dem Binder handelt es sich vorzugsweise um einen organischen Binder oder um ein Gemisch von mehreren, vorzugsweise organischen Komponenten. Beispielsweise kann der Feedstock 50-80 Gew.-% des Metallpulvers und 20-50 Gew.-% der organischen Komponenten enthalten.

Die Erfindung ist hinsichtlich des Binders nicht auf bestimmte Materialien oder Materialzusammensetzungen beschränkt. Beispielsweise eignen sich folgende Materialien im Rahmen des erfindungsgemäßen Herstellungsverfahrens als Binder: Polyamid, Polyoxymethylen, Polycarbonat, Styrol-Acrylnitril-Copolymerisat, Polyimid, natürliches Wachs und Öl, Duroplast, Cyanate, Polypropylene, Polyacetate, Polyethylene, Ethylen-Vinyl-Acetate, Polyvinyl-Alkohole, Polyvinyl-Chloride, Polystyrol, PolymethylMethacrylate, Anilin, Wasser, Mineralöl, Agar, Glycerin, Polyvinyl-Butyryl, Polybutyl-Methacrylat, Cellulose, Ölsäure, Phthalat, Paraffin, Wachs, insbesondere Carnauba-Wachs, Ammonium, Polyacrylat, Diglycerid-Stearate und -Oleate Glyceryl-Monostearate, Isopropyl-Titanate, Lithium-Stearate, Monoglyceride, Formaldehyde, Octyl-Säure-Phosphate, Olefin-Sulfonate, Phosphatester, Säurefettalkoholester, Stearinsäure, Zinkstearate.

Weiterhin ist zu erwähnen, dass der Binder beispielsweise, jedoch bevorzugt, auch folgende Bestandteile enthalten kann:
a) 10-50 Gew.-% Polyamid,
b) 40-80 Gew.-% Säurefettalkoholester und
c) 2 20 Gew.-% einer organischen Säure.

Ferner besteht die Möglichkeit, dass der Binder - auch bevorzugt - folgende Bestandteile enthält:
a) 50-96 Gew.-% eines oder mehrerer Polyoxymethylen-Homopolymerisate oder Polyoxymethylen-Copolymerisate,
b) 2-35 Gew.-% eines oder mehrerer Polyolefine und
c) 2-40 Gew.-% Poly-1,3-dioxepan oder Poly-1,3-dioxolan oder deren Mischungen.

Der Feedstock wird unter Wärmeeinfluss zu einer spritzbaren Masse vorbereitet und wird in einem Spritzgießprozess verarbeitet (Schritt 2). Hierzu wird der Feedstock in ein geschlossenes Werkzeug bei hohem Druck gespritzt. Dabei weist das Werkzeug Einbauten oder Schieber oder sonstige Komponenten auf, um im gewünschten Bereich der herzustellenden ersten Komponente Aufnahmen - auch Ausnehmungen oder Aussparungen genannt - zu bilden, in die eine zweite Komponente gespritzt wird. Die Art der Aussparungen bzw. Ausnehmungen sollten dabei derart geometrisch ausgebildet sein, dass sich Hinterschneidungen ergeben, wie dies nachstehend erläutert wird.

Im Verfahrensschritt 3 erfolgt ein Entbindern, so dass ein Braunteil zur Verfügung steht. Im nachfolgendem Verfahrensschritt 4 wird das Braunteil im Temperaturbereich zwischen 700 °C und 1400 °C gesintert. Ggf. wird in einem Verfahrensschritt 5 eine Bearbeitung durchgeführt.

Sodann wird entsprechend der erfindungsgemäßen Lehre in die in der ersten Komponente vorhandenen Ausnehmungen oder Aussparungen, die Hinterschneidungen aufweisen, im Spritzgießverfahren der zweite Werkstoff gespritzt, bei dem es sich um einen kohlenstoffbasierten oder -haltigen Werkstoff handelt, gespritzt. Auch ein Umspritzen der ersten Komponente in gewünschtem Umfang ist möglich.

Um den Spritzgießprozess durchzuführen wird im Verfahrensschritt 6 insbesondere Kohlenstoff mit einem Bindemittel gemischt, um einen Feedstock herzustellen.

Die Partikelverteilung des Kohlenstoffs beträgt vorzugsweise 4 µm ≤ D20 ≤ 12 µm, 14 µm ≤ D50 ≤ 28 µm, 35 µm ≤ D90 ≤ 50 µm und/oder D100 ≤ 100 µm.

Das Bindemittel enthält bzw. besteht aus thermoplastischen oder duromeren Polymeren. Wird ein thermoplastischer Werkstoff verwendet, gelangen insbesondere Hochleistungsthermoplaste wie ETFE (Ethylen-Tetrafluorethylen) zur Anwendung. Entsprechende Hochleistungsthermoplaste weisen sehr gute mechanische Eigenschaften bei hohen Temperaturen (150 °C), eine exzellente chemische Beständigkeit und herausragende tribologische Eigenschaften auf. Komponenten des Kohlenwerkstoffs können Koks und Grafit sein.

Alternativ kann die Verwendung duroplastischer Polymere als Bindemittel in Frage kommen, welches im Spritzguss vernetzt. Ein Trennadditiv sollte hinzugegeben werden.

Die erste Komponente des Bauteils befindet sich gemäß Verfahrensschritt 7 in einer Spritzgießform. Sodann wird im Verfahrensschritt 8 der Feedstock in die Gießform gespritzt. Gemäß Verfahrensschritt 9 kann ggf. eine thermische oder mechanische Bearbeitung erfolgen. Eine Qualitätsprüfung (Schritt 10) kann sich anschließen.

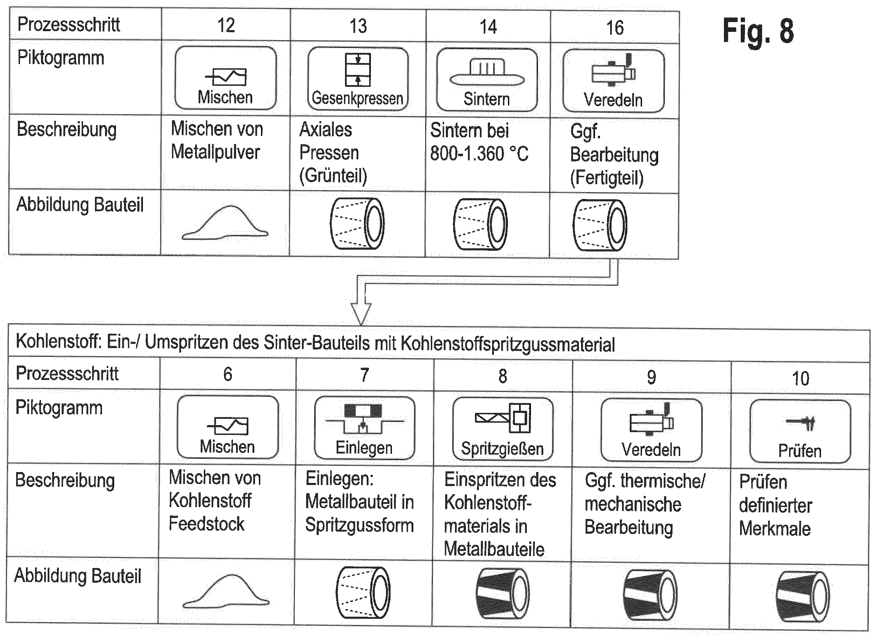

Gemäß dem der Fig. 8 zu entnehmenden Verfahrensablauf wird die erste Komponente des Bauteils nicht durch Spritzgießen hergestellt, sondern durch axiales Pressen.

Dabei wird zunächst im Verfahrensschritt 12 das zu pressenden Metallpulver gemischt. Im Verfahrensschritt 13 wird ein axiales Pressen durchgeführt, um anschließend den so hergestellten Grünling typischerweise im Temperaturbereich zwischen 800 °C und 1360 °C zu sintern (Verfahrensschritt 14). Entsprechend den Erläuterungen gemäß Fig. 7 kann sich eine Bearbeitung anschließen, so dass die erste Komponente des Bauteils zur Verfügung steht. Es schließen sich sodann die erfindungsgemäßen Verfahrensschritte 6, 7 und 8 an, wie diese im Zusammenhang mit der Fig. 7 erläutert worden sind. Auch die Verfahrensschritte 9 und 10 sind möglich.

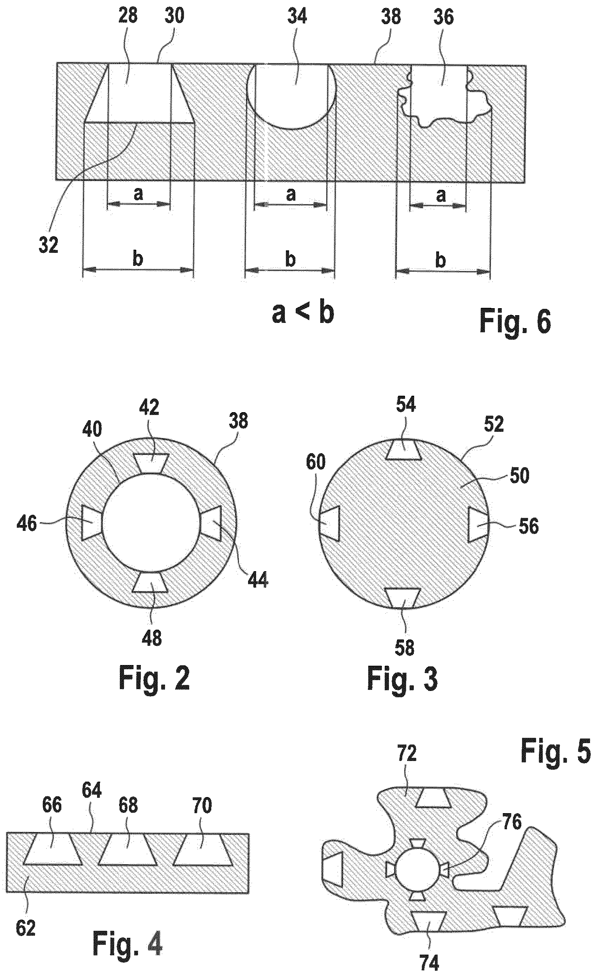

Um die zweite Komponente, also insbesondere den kohlenstoffbasierten bzw. - enthaltenden zweiten Werkstoff, in den Ausnehmungen der ersten Komponente unverlierbar zu sichern, weisen die Ausnehmungen oder Aussparungen - allgemein als Ausnehmung zu bezeichnen - Hinterschneidungen auf, wie diese der Fig. 6 zu entnehmen sind. So ist in Fig. 6 links eine Aussparung 28 dargestellt, die im Schnitt eine Schwalbenschwanzhinterschnittgeometrie aufweist. Hierdurch ist sichergestellt, dass der in die Ausnehmung 28 eingebrachte zweite Werkstoff unverlierbar in der Ausnehmung 28 verbleibt. Dabei weist die Ausnehmung 28 erkennbar eine Öffnung 30 auf, deren lichte Weite kleiner als im Ausführungsbeispiel die Breite des Bodens 32 der Aussparung 28 ist, und zwar im gleichen Schnitt.

Selbstverständlich können Ausnehmungen auch andere Geometrien aufweisen, wie die Ausnehmungen 34, 36 in der Fig. 6 verdeutlichen. Charakteristisch für sämtliche Ausnehmungen ist jedoch, dass die in der Oberfläche 38 verlaufende Öffnung der Ausnehmung 34, 36 kleiner als ein Bereich der Ausnehmung 34, 36 innerhalb der Ausnehmung 34, 36 ist, und zwar in einer gleichen Querschnittsfläche. Dabei kann die Ausnehmung 36 innenwandseitig beliebige Geometrien aufweisen, wie die rechte Darstellung der Fig. verdeutlicht.

Ist das erfindungsgemäße Verfahren zuvor unter Berücksichtigung eines kohlenstoffbasierten bzw. -enthaltenden Werkstoffs erläutert worden, so kann für den zweiten Werkstoff auch spritzgussfähiger Kunststoff eingesetzt werden, wie PA, PEEK, PTFE, PES oder PPS.

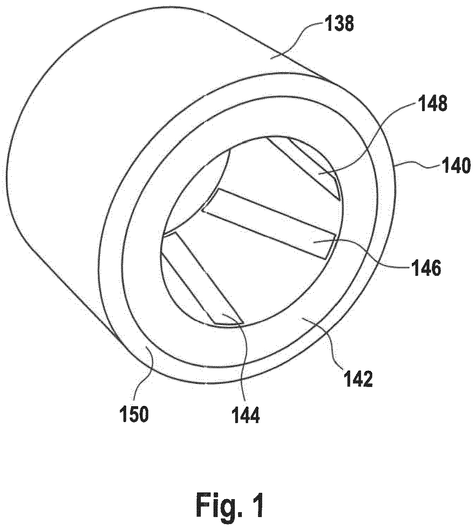

Den Fig. 1 bis 3 sind verschiedene Ausführungsformen von Bauteilen zu entnehmen, die eine erste und zweite Bauteilkomponente aufweisen, wobei in den Fig. 2 bis 5 die Ausnehmungen dargestellt sind, in die der zweite Werkstoff gespritzt wird.

In Fig. 2 ist ein Gleitlager 38 prinzipiell dargestellt, von dessen Innenfläche 40 Aufnahmen 42, 44, 46, 48 ausgehen, die im Schnitt senkrecht zur Längsachse des Gleitlagers 38 eine Schwalbenschwanzgeometrie aufweisen, also im Schnitt eine Trapezgeometrie, wobei die kurze Basisseite gleitringinnenseitig verläuft.

In Fig. 3 ist eine Welle 50 gezeichnet, von deren Außenfläche 52 Aufnahme 54, 56, 58, 60 ausgehen, die insbesondere durch Spritzgießen ausgebildet werden, wenngleich ein entsprechendes Bauteil, also im Ausführungsbeispiel die Welle 50, auch durch z.B. ein additives Verfahren oder durch Pressen mit den entsprechenden Aufnahmen 54, 56, 58, 60 hergestellt werden kann. In die Aufnahmen 54, 56, 58, 60 wird entsprechend der erfindungsgemäßen Lehre der zweite Werkstoff gespritzt, um so Bereiche in der Außenfläche der Welle 50 zur Verfügung zu stellen, die insgesamt einen insbesondere tribologisch beanspruchten Funktionsbereich bilden.

In Fig. 4 ist eine Gleitplatte 62 rein prinzipiell darstellt, von dessen Gleitfläche 64 im Schnitt gleichfalls schwalbenschwanzförmige, also im Schnitt trapezförmige, Aufnahmen 66, 68, 70 ausgehen, in denen bei der zu nutzenden Gleitfläche 64 die zweite Komponente aus dem zweiten Werkstoff durch Spritzen eingebracht ist.

Die Fig. 5 soll rein prinzipiell verdeutlichen, dass ein Bauteil 72 sowohl innenseitig als auch außenseitig einen Funktionsbereich aufweisen kann, wie dies anhand der Fig. 2 bis 4 erläutert wurde, also ein Bereich, der z.B. tribologisch beansprucht wird. Es befinden sich in den Ausnehmungen, von denen zwei beispielhaft mit dem Bezugszeichen 74 außen verlaufende und mit 76 innen verlaufende Ausnehmungen gekennzeichnet sind, in denen die aus dem kohlenstoffbasierten zweiten Werkstoff bestehenden zweiten Komponenten durch Spritzgießen eingebracht werden.

In Fig. 1 ist noch einmal ein Gleitlager 138 dargestellt, das aus einem Außenkörper als erste Komponente 140 und einem Innenkörper als zweite Komponente 142 besteht, die nach der erfindungsgemäßen Lehre hergestellt sind. Der die zweite Komponente 142 bildende kohlenstoffbasierte Werkstoff ist durch Spritzen in Hinterschneidungen aufweisende Aufnahmen eingebracht, so dass eine Unverlierbarkeit gegeben ist. Das Gleitlager 138 gemäß Fig. 1 weist hierzu entsprechende im Schnitt schwalbenschwanzförmige Aufnahmen auf, die durch innenseitig erkennbare Stege 144, 146, 148 begrenzt sind, zu deren Oberflächen fluchtend der Innenkörper 142 mit seiner Innenfläche verläuft.

Im Ausführungsbeispiel gehen die Aufnahmen, die eine schwalbenschwanzförmige Hinterschnittgeometrie aufweisen, im Bereich der Stirnfläche 150 des Außenkörpers 140 in eine ringförmige Aufnahme über, so dass die die schwalbenschwanzförmigen Aufnahmen begrenzenden Stege 144, 146 nicht nur entlang ihrer Längsseiten, sondern auch im Bereich ihrer Stirnseiten bündig in den Innenkörper 142 übergehen.

Des Weiteren ist aus dem Verlauf der Stege 144, 146, 148 erkennbar, dass die Breite der Ausnehmungen variieren, und zwar im Ausführungsbeispiel gegenläufig. So verlaufen die Stege 144, 146 in Richtung des hinteren Endes des Außenkörpers 138 konisch zulaufend, wohingegen die Stege 146, 148 zur Stirnfläche 150 des Außenkörpers 138 abstandsmäßig abnehmen.

Die Breite der Aufnahmen variiert somit in Längsachsenrichtung des Gleitlagers 138, und zwar insbesondere stetig abnehmend bzw. zunehmend, wobei benachbarte Aufnahmen gegenläufig in Bezug auf ihre Breitenänderungen ausgebildet sind.

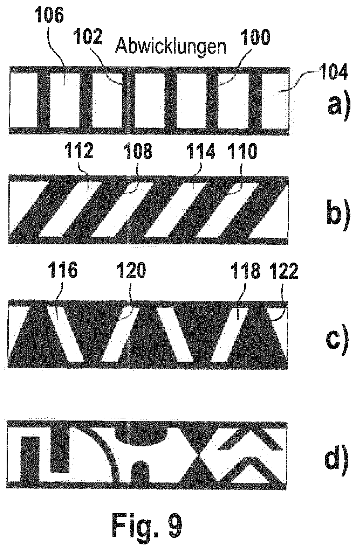

In der Fig. 9 werden Abwicklungen von nicht erfindungsgemäßen und erfindungsgemäßen drehsymmetrischen Bauteilen, wie Lager, Buchsen, Zahnräder, Riemenräder, Pumpenräder, rein prinzipiell dargestellt, um zu verdeutlichen, wie der Verlauf der als Gleit- oder Schmierelement zu bezeichnenden zweiten Bauteilkomponente in der ersten Bauteilkomponente erfolgen kann.

So ist der Fig. 9a) eine nicht erfindungsgemäße Abwicklung zu entnehmen, bei der parallel zueinander verlaufende Hinterschneidung aufweisende Aussparungen in der Innenfläche des Bauteils ausgebildet sind, die sich in der sichtbaren Innenfläche des Bauteils in Form von Stegen 100, 102 darstellen, zwischen denen die zweite Bauteilkomponente 104, 106, also die Schmierelemente, verlaufen.

In der Fig. 9b) erstecken sich in der gute Gleiteigenschaften aufweisenden Fläche des Bauteils abwechselnd gleichläufig geneigt zur Längsachse des Bauteils verlaufende Aufnahmen, die in der zeichnerischen Darstellung durch schrägverlaufende Stege 108, 110 dargestellt sind, zwischen denen sich der durch Spritzen eingebrachte zweite Werkstoff erstreckt, der folglich zur Oberfläche hin gleichfalls zur Längsachse des Bauteils sich in schräg verlaufenden Streifen 112, 114 äußert. Der Verlauf ergibt eine Helix-Geometrie.

Bei der Abwicklung gemäß Fig. 9c) sind die in der sich bis zur Oberfläche hin erstreckenden Schmierelemente, die aus dem zweiten Werkstoff bestehen, insbesondere aus einem kohlenstoffbasierten bzw. -enthaltenden Werkstoff, in Aussparungen eingebracht, die im Schnitt eine Schwalbenschwanzhinterschnittgeometrie aufweisen, wobei sich die Breite in Längsachsenrichtung des Bauteils verändert. Die die Ausnehmungen begrenzenden sichtbaren Stege 116, 118 der ersten Bauteilkomponente verlaufen schräg zueinander. Zwischen diesen erstrecken sich die an der Oberfläche sichtbar, eine trapezförmige Geometrie aufweisenden Gleit- oder Schmierelemente 120, 122, die abwechselnd gegenläufig sind.

Die Abwicklung gemäß Fig. 9d) soll noch einmal verdeutlichen, dass durch die durch die Urformprozesse (MIM) oder Presstechnik, insbesondere axiale Presstechnik, bedingten Freiheitsgrade in Form und Geometrie gewünschte Gestaltungen der Aufnahmen in der ersten Bauteilkomponente ermöglicht werden, in denen die zweiten Bauteilkomponenten, also die Gleit- oder Schmierelemente durch Spritzen hergestellt werden.

Nachfolgend wird anhand von Ausführungsbeispielen die erfindungsgemäße Lehre näher erläutert.

Dies soll anhand eines Gleitlagers erfolgen, wie dieses prinzipiell der Fig. 1 zu entnehmen ist. Das Gleitlager 138 besteht aus einem Außenkörper, der als Fassung zu bezeichnen ist, als erste Komponente 140 und einem Innenkörper als zweite Komponente 142, die in der Fassung Schmierstoffelemente bildet.

Die Fassung oder die erste Komponente 140 kann wahlweise im Pulverspritzgießverfahren (MIM) oder durch axiales Pressen hergestellt werden.

Gelangt das Pulverspritzgießverfahren zur Anwendung, so wird zunächst eine Spritzgussmaschine mit Metallpulver/Polymer Compound (Feedstock) bestückt, wobei der Werkstoff ein schmelzbares thermoplastisches Polymer, einen Schmelzpunkt von ≥ 80 °C, vorzugsweise von ≥ 120 °C aufweist, wobei der Werkstoff einen Anteil an dem thermoplastischen Polymer von > 10 Gew.-% bis 50 Gew.-% und einen Anteil an dem Metallpulver von > 70 Gew.-% bis 95 Gew.-% aufweisen sollte. Die Granulatgröße beträgt vorzugsweise 1 mm bis 4 mm.

Das Spritzgusswerkzeug wird sodann auf 60 °C bis 200 °C vorerwärmt. Das Spritzgusswerkzeug wird geschlossen. Die Schließkraft kann 300 kN betragen.

Die Formmasse wird in das Werkzeug gespritzt, wobei spezifische Spritzdrücke zwischen 500 bar bis 2500 bar liegen. Typische Zykluszeiten sind 30 s bis 90 s Die Prozesstemperaturen sind > 100 °C und < 200 °C.

Die Spritzgussmasse füllt die Kavitäten des Werkzeugs einschließlich der möglichen Hinterschnittgeometrien.

Sodann wird die Spritzgussmasse auf Werkzeugtemperatur abgekühlt und erstarrt bei < 120 °C. Das Spritzgusswerkzeug wird geöffnet, das Grünteil ausgestoßen und entnommen.

Anschließend wird das Grünteil in einen Entbinderungsofen gegeben. Dieser wird mit einem Lösungsmittel geflutet und Anteile der Polymerkomponenten bei 30 °C bis 100 °C innerhalb von 15 h bis 100 h ausgelöst.

Es wird das "Braunteil" entnommen. Es schließt sich ein Sintern an. Hierzu wird das Braunteil in einen entsprechenden Sinterofen eingefahren. Dieser wird mit einer Atmosphäre z. B. Endogas oder Formiergas geflutet und die Braunteile bei Temperaturen zwischen 700 °C und 1500 °C zum Fertigteil gesintert. Dabei werden Restpolymerbestandteile thermisch entfernt. Sodann wird das Sinterbauteils aus dem Ofen entnommen und ggf. nachbearbeitet.

Alternativ kann die Fassung, also die erste Komponente 140, durch einen axialen Press-Prozess hergestellt werden. Hierzu kann ein nichtrostendes Sinterpulver auf Eisenbasis mit max. 4 Gew.-% Molybdän, max. 20 Gew.-% Chrom, max. 16 % Nickel und max. 1,2 Gew.-% Wachs in die Kavität einer Pulverpresse mittels eines Füllschuh gefüllt werden. Bei einer Spannung von 600 MPa erfolgt eine beidseitige axiale Verdichtung bei ca. 10 Hub/min bis 30 Hub/min.

Das Entformen des sogenannten Grünlings erfolgt entweder über Abziehen der Matrize oder Ausstoßen durch den Unterstempel. Der axial gepresste Grünling hat eine ausreichende Festigkeit.

Die Entbinderung des enthaltenen Wachses erfolgt in einem Temperaturbereich zwischen 100 °C und 500 °C. Bei 2/3 der Schmelztemperatur wird der Sinterprozess durchgeführt.

Sofern erforderlich kann eine mechanische Nachbearbeitung erfolgen, um eine gewünschte Oberflächengüte und Genauigkeit zu erzielen.

Unabhängig davon, ob die die durch Stege 144, 146, 148 getrennten Hinterschnitte aufweisende erste Komponente 142, also die Fassung, im MIM-Prozess oder durch axiales Pressen hergestellt wird, wird sodann durch Spritzgießen in die Hinterschnitte das den Schmierstoff bildende Material eingebracht.

Hierzu wird eine Spritzgussmaschine mit Kohlenstoff/Polymer Compound bestückt, wobei der Werkstoff ein schmelzbares thermoplastisches Fluorpolymer Polymer und einen Schmelzpunkt von ≥ 240 °C, vorzugsweise von ≥ 280 °C, aufweist. Der Anteil an dem thermoplastischen Fluorpolymer Polymer im Werkstoff sollte > 30 Vol.-% bis 65 Vol.-% und der Anteil von Kohlenstoff von > 35 Vol.-% bis 70 Vol.-% betragen. Die Granulatgröße beträgt vorzugsweise 1 mm bis 4 mm.

Die erste Komponente 140, also die Fassung, wird auf 60 °C bis 200 °C erwärmt, um sodann in das Spritzgusswerkzeug eingelegt zu werden, das die gleiche oder in etwa die gleiche Temperatur aufweist. Das Spritzgusswerkzeug wird geschlossen. Die Schließkraft kann 220 kN betragen. Die Formmasse wird in das Werkzeug gespritzt. Spezifische Spritzdrücke betragen 1500 bar bis 2200 bar. Typische Zykluszeiten betragen 15 s bis 25 s.

Die Prozesstemperaturen sind > 300 °C und < 370 °C. Beim Spritzprozess füllt die Spritzgussmasse die Kavität des eingelegten Bauteils einschließlich der Hinterschnitte. Sodann wird die Spritzgussmasse auf Werkzeugtemperatur abgekühlt und erstarrt bei < 280 °C. Das Spritzgusswerkzeug wird geöffnet, das Hybridbauteil ausgestoßen, entnommen und abgekühlt. Ggf. erfolgt ein Nachbearbeiten.

Es besteht auch die Möglichkeit, den Prozess beginnend mit dem Vorwärmen der Fassung und Einlegen der Fassung in das Spritzgusswerkzeug etc. mehrfach durchzuführen, sofern Hinterschnitte nicht im erforderlichen Umfang mit dem Schmierstoff ausgefüllt sein sollten.

### Bezugszeichenliste:

| | | | |
|---|---|---|---|
| 28 | Aussparung | 100 | Steg |
| 30 | Öffnung | 102 | Steg |
| 32 | Boden | 104 | zweite Komponente |
| 34 | Ausnehmung | 106 | zweite Komponente |
| 36 | Ausnehmung | 108 | Steg |
| 37 | Oberfläche | 110 | Steg |
| 38 | Gleitlager | 112 | Streifen |
| 40 | Innenfläche | 114 | Streifen |
| 42 | Aufnahme | 116 | Steg |
| 44 | Aufnahme | 118 | Steg |
| 46 | Aufnahme | 120 | Schmiermittel |
| 48 | Aufnahme | 122 | Schmiermittel |
| 50 | Welle | 138 | Gleitlage |
| 52 | Außenfläche | 140 | erste Komponente |
| 54 | Aufnahme | 142 | zweite Komponente |
| 56 | Aufnahme | 144 | Steg |
| 58 | Aufnahme | 146 | Steg |
| 60 | Aufnahme | 148 | Steg |
| 62 | Gleitplatte | | |
| 64 | Gleitfläche | | |
| 66 | Aufnahme | | |
| 68 | Aufnahme | | |
| 70 | Aufnahme | | |
| 72 | Bauteil | | |
| 74 | Ausnehmung | | |
| 76 | Ausnehmung | | |

## Patentansprüche

1. Verfahren zur Herstellung eines Bauteils (38, 50, 62, 72, 138), insbesondere drehsymmetrisches Bauteil, wie insbesondere Lager, Gleitlager, Zahnrad, Ritzel, Riemenräder, Pumpenräder, oder Bauteil mit linearer oder anders geformter Gleitfläche mit einem Funktionsbereich, insbesondere tribologisch, thermisch und/oder mechanisch zu beanspruchenden Bereich, umfassend eine erste Bauteilkomponente (140) aus einem metallischen ersten Werkstoff und eine zweite Bauteilkomponente (142) aus einem aus Kohlenstoff bestehenden oder enthaltenden zweiten Werkstoff, mit den Verfahrensschritten
- Herstellen der ersten Bauteilkomponente (140) mit zumindest einer in dem Funktionsbereich ausgebildeten Aufnahme,
- Herstellen der zweiten Bauteilkomponente (142) durch Spritzgießen des zweiten Werkstoffs zumindest in die zumindest eine Aufnahme,
**dadurch gekennzeichnet,**
**dass** die zumindest eine Aufnahme (28, 34, 36, 42, 44, 46, 48, 54, 56, 58, 74, 76) derart ausgebildet wird, dass die Breite entlang der Längsachse variiert, oder dass die Aufnahmen durch schräg verlaufende Stege (108, 110) begrenzt werden und in Umfangsrichtung abwechselnd gleichläufig geneigt zur Längsachse des Bauteils verlaufen, so dass sich zwischen den Aufnahmen der durch Spritzen eingebrachte zweite Werkstoff erstreckt, der zur Oberfläche hin gleichfalls zur Längsachse des Bauteils schräg verlaufende Streifen (112, 114) ausbildet.

2. Verfahren nach Anspruch 1,
**dadurch gekennzeichnet,**
**dass** die erste Bauteilkomponente (140) durch Ur- oder Umformen, wie additiven Herstellungsprozess, Pressen, insbesondere axiales Pressen oder isostatisches Pressen, oder durch Metallpulverspritzen und nach gegebenenfalls erfolgter Entbinderung anschließendes Sintern hergestellt wird.

3. Verfahren nach Anspruch 1 oder 2,
**dadurch gekennzeichnet,**
**dass** die zumindest eine Aufnahme (28, 34, 36, 42, 44, 46, 48, 54, 56, 58, 74, 76) mit einer von einer Öffnung begrenzten Hinterschneidung zur Unverlierbarkeit der zweiten Bauteilkomponente ausgebildet wird, oder dass die Aufnahme (28, 34, 36, 42, 44, 46, 48, 54, 56, 58, 74, 76) mit einer Längsachse ausgebildet wird, wobei die Aufnahme quer zur Längsachse der Aufnahme eine Hinterschnittgeometrie mit einer Öffnung aufweist, die zumindest abschnittsweise kleiner als maximaler Querschnitt der Aufnahme ist, jeweils quer zu der Längsachse der Aufnahme betrachtet.

4. Verfahren nach zumindest einem der vorhergehenden Ansprüche,
**dadurch gekennzeichnet,**
**dass** mehrere Aufnahmen (28, 34, 36, 42, 44, 46, 48, 54, 56, 58, 74, 76) mit Hinterschnittgeometrie, insbesondere schwalbenschwanzförmiger Hinterschnittgeometrie ausgebildet werden, wobei benachbarte Aufnahmen derart ausgebildet werden, dass diese in ihrer jeweiligen Breite entgegengesetzt variieren oder gleich bleiben oder helixförmig ausgebildet sind.

5. Verfahren nach zumindest einem der vorhergehenden Ansprüche,
**dadurch gekennzeichnet,**
**dass** als der zweite Werkstoff ein kohlenstoffbasierter oder -haltiger Werkstoff oder ein spritzgussfähiger Kunststoff verwendet wird, wobei vorzugsweise als der kohlenstoffbasierte oder -haltiger Werkstoff ein mit Kohlenstoff gefüllter polymerer Werkstoff oder als Kohlenstoffwerkstoff Grafit, ein überwiegend kohlenstoffhaltiger Feststoff, Petrolkoks oder eine Mischung dieser Stoffe verwendet wird, oder dass als der zweite Werkstoff ein solcher verwendet wird, der einen Anteil an thermoplastischem Polymer von 30 Vol.-% bis < 60 Vol.-.% und einen Anteil an Kohlenstoff von > 40 Vol.-% bis 70 Vol.-% aufweist.

6. Verfahren nach zumindest einem der vorhergehenden Ansprüche,
**dadurch gekennzeichnet,**
**dass** als der zweite Werkstoff ein solcher verwendet wird, der frei von Polytetrafluorethylen oder reinem PTFE ist und/oder dass als Bindemittel für den zweiten Werkstoff zumindest ein thermoplastisches und/oder duroplastisches Polymer verwendet wird.

7. Verfahren nach zumindest einem der vorhergehenden Ansprüche,
**dadurch gekennzeichnet,**
**dass** als der polymere Werkstoff ein solcher verwendet wird, der ein thermoplastisches Fluorpolymer aufweist, wobei insbesondere als der polymere Werkstoff, vorzugsweise ausschließlich, Ethylen-Tetrafluorethylen-Copolymer, oder Ethylen-Tetrafluorethylen-Copolymer und ein Hochtemperatur-Thermoplast, vorzugsweise Polyphenylensulfid, Polyetheretherketon, Polyethersulfon und/oder Polyamidimid, verwendet wird, und/oder wobei als polymerer Werkstoff, vorzugsweise ausschließlich, ein Hochtemperatur-Thermoplast, bevorzugt Polyphenylensulfid, Polyetheretherketon, Polyethersulfon oder Polyamidimid, verwendet wird.

8. Verfahren nach zumindest einem der vorhergehenden Ansprüche,
**dadurch gekennzeichnet,**
**dass** als metallischer erster Werkstoff ein solcher verwendet wird, der zumindest ein Metall aus der Gruppe Kupfer, Nickel, Chrom, Zinn, Molybdän, Eisen enthält

9. Verfahren nach zumindest einem der vorhergehenden Ansprüche,
**dadurch gekennzeichnet,**
**dass** die erste Bauteilkomponente (140) von der zweiten Bauteilkomponente (142) zumindest teilweise umspritzt und/oder in die erste Bauteilkomponente eingespritzt wird.

10. Verfahren nach zumindest einem der vorhergehenden Ansprüche,
**gekennzeichnet durch** die Verfahrensschritte
- Herstellen der zumindest eine Aufnahme (28, 34, 36, 42, 44, 46, 48, 54, 56, 58, 74, 76) aufweisenden ersten Bauteilkomponente (140) durch Spritzgießen oder Pressen des ersten Werkstoffs und Sintern,
- Ausfüllen der zumindest einen Aufnahme mittels Spritzgießens einer Kohlenstoff und Bindemittel enthaltenden Mischung oder eines Kunststoffs zur Herstellung eines Grünlings, und
- ggf. anschließende Wärmebehandlung und/oder mechanische Behandlung, wobei vorzugsweise die Mischung aus Kohlenstoff und Bindemittel bei einer Temperatur T mit 300 °C ≤ T ≤ 370 °C gespritzt wird und/oder die mittels Spritzgießen hergestellte erste Bauteilkomponente (140) bei einer Temperatur T mit 800 °C ≤ T ≤ 1360 °C und vorzugsweise über eine Zeit t mit 30 min ≤ 60 min gesintert wird.

11. Bauteil (38, 50, 62, 72, 138), vorzugsweise gesintertes Bauteil, insbesondere drehsymmetrisches Bauteil, wie Lager, Gleitlager, Zahnrad, Ritzel, Riemenräder, Pumpenräder, oder ein Bauteil mit linearer oder anders geformter Gleitfläche, mit zumindest einem Funktionsbereich, insbesondere mit tribologisch, thermisch und/oder mechanisch zu beanspruchendem Bereich, wie Lager, insbesondere Gleitlager, Zahnrad, insbesondere hergestellt nach zumindest einem der vorhergehenden Ansprüche, wobei das Bauteil einen ersten Bauteilkörper (140) aus einem metallischen ersten Werkstoff und einen zweiten Bauteilkörper (142) aus einem kohlenstoffhaltigen oder kohlenstoffbasierten zweiten Werkstoff aufweist oder aus diesem besteht, wobei der erste Bauteilkörper in dem Funktionsbereich zumindest eine zumindest eine Hinterschneidung aufweisende Aufnahme (28, 34, 36, 42, 44, 46, 48, 54, 56, 58, 74, 76) aufweist, die von dem zweiten Bauteilkörper mittels Spritzgießen ausgefüllt ist,
**dadurch gekennzeichnet,**
**dass** die zumindest eine Aufnahme (28, 34, 36, 42, 44, 46, 48, 54, 56, 58, 74 76) in Achsrichtung des Bauteils (38, 50, 62, 72, 138) in ihrer Breite variiert, oder dass die Aufnahmen durch schräg verlaufende Stege (108, 110) begrenzt sind und in Umfangsrichtung abwechselnd gleichläufig geneigt zur Längsachse des Bauteils verlaufen, so dass sich zwischen den Aufnahmen der durch Spritzen eingebrachte zweite Werkstoff erstreckt, der zur Oberfläche hin gleichfalls zur Längsachse des Bauteils schräg verlaufende Streifen (112, 114) ausbildet.

12. Bauteil nach Anspruch 11,
**dadurch gekennzeichnet,**
**dass** in dem Funktionsbereich mehrere mit dem zweiten Bauteilkörper (142) ausgefüllte Aufnahmen (28, 34, 36, 42, 44, 46, 48, 54, 56, 58, 74, 76) vorgesehen sind, wobei vorzugsweise der zweite Bauteilkörper (142) durch einen in mehrere Aufnahmen (28, 34, 36, 42, 44, 46, 48, 54, 56, 58, 74, 76) eingebrachten zweiten Werkstoff gebildet ist, wobei vorzugsweise bei mehreren im Schnitt eine Schwalbenschwanzhinterschnittgeometrie aufweisenden Aufnahmen (28, 34, 36, 42, 44, 46, 48, 54, 56, 58, 74, 76) benachbarte Aufnahmen gegenläufig verlaufende Breiten oder gleiche Breiten aufweisen und/oder bei mehreren im Schnitt eine Schwalbenschwanzhinterschnittgeometrie aufweisenden Aufnahmen (28, 34, 36, 42, 44, 46, 48, 54, 56, 58, 74, 76) benachbarte Aufnahmen sich entlang einer oder der Achse konisch erweitern bzw. verjüngen oder eine helixförmige Geometrie darstellen.

13. Bauteil nach zumindest einem der Ansprüche 11 oder 12,
**dadurch gekennzeichnet,**
**dass** der Funktionsbereich ein Abschnitt oder mehrere Abschnitte einer zu einer Achse rotationssymmetrisch verlaufenden Umhüllenden ist.

14. Bauteil nach zumindest einem der Ansprüche 11 bis 13,
**dadurch gekennzeichnet,**
**dass** die zumindest eine Aufnahme (28, 34, 36, 42, 44, 46, 48, 54, 56, 58, 74, 76) in senkrecht zu der Achse verlaufendem Schnitt vorzugsweise eine Schwalbenschwanzhinterschnittgeometrie aufweist, und/oder dass die Breite der Aufnahme (28, 34, 36, 42, 44, 46, 48, 54, 56, 58, 74, 76) in Achsrichtung stetig sich ändert.

15. Bauteil nach zumindest einem der Ansprüche 11 bis 14,
**dadurch gekennzeichnet,**
**dass** der zweite Bauteilkörper (140) oberflächenseitig bündig in angrenzenden Bereich des ersten Bauteilkörpers (142) übergeht oder übermaßig oder untermaßig zu diesem ist, und/oder der zweite Bauteilkörper (142) zumindest abschnittsweise den ersten Bauteilkörper (140) außen- und/oder innenseitig umhüllt.

## Claims

1. A method for producing a part (38, 50, 62, 72, 138), in particular a rotationally symmetrical part such as in particular a bearing, plain bearing, gear, pinion, belt wheels, pump wheels, or a part having a linearly or otherwise shaped sliding surface with a functional area, in particular with an area to be tribologically, thermally and/or mechanically stressed, comprising a first part component (140) made of a metal first material and a second part component (142) made of a second material consisting of or containing carbon, with the method steps:
- producing the first part component (140) with at least one receptacle formed in the functional area,
- producing the second part component (142) by injection moulding of the second material at least into the at least one receptacle,
**characterized in**
**that** the at least one receptacle (28, 34, 36, 42, 44, 46, 48, 54, 56, 58, 74, 76) is formed such that the width varies along the longitudinal axis, or in that the receptacles are limited by obliquely extending webs (108, 110) and extend in the circumferential direction alternatingly and unidirectionally angled relative to the longitudinal axis of the part, such that the second material, inserted by injection and forming strips (112, 114) likewise extending obliquely to the longitudinal axis of the part towards the surface, extends between the receptacles.

2. The method according to claim 1,
**characterized in**
**that** the first part component (140) is produced by original casting or recasting, such as by an additive production process, by pressing, in particular axial pressing or isostatic pressing, or by metal injection moulding and subsequent sintering after optional debinding.

3. The method according to claim 1 or 2,
**characterized in**
**that** the at least one receptacle (28, 34, 36, 42, 44, 46, 48, 54, 56, 58, 74, 76) is formed with an undercut limited by an opening to ensure captivity of the second part component, or in that the receptacle (28, 34, 36, 42, 44, 46, 48, 54, 56, 58, 74, 76) is formed with a longitudinal axis, wherein the receptacle has, transversely to the longitudinal axis of the receptacle, an undercut geometry with an opening which is smaller than the maximum cross-section of the receptacle at least in some sections, in each case when viewed transversely to the longitudinal axis of the receptacle.

4. The method according to at least one of the preceding claims,
**characterized in**
**that** several receptacles (28, 34, 36, 42, 44, 46, 48, 54, 56, 58, 74, 76) are formed with an undercut geometry, in particular with a dovetail-shaped undercut geometry, wherein adjacent receptacles are formed such that they vary opposingly in their respective width or remain the same or are formed helical.

5. The method according to at least one of the preceding claims,
**characterized in**
**that** a carbon-based or carbon-containing material or an injection-mouldable plastic is used as the second material, wherein a polymer material filled with carbon is preferably used as the carbon-based or carbon-containing material, or graphite, a predominantly carbon-containing solid, petroleum coke or a mixture of said materials is used as the carbon material, or in that the second material is one which has a proportion of thermoplastic polymer of 30 % by volume to < 60 % by volume and a proportion of carbon of > 40 % by volume to 70 % by volume.

6. The method according to at least one of the preceding claims,
**characterized in**
**that** the second material used is one which is free of polytetrafluoroethylene or pure PTFE and/or in that at least one thermoplastic and/or thermosetting polymer is used as the binder for the second material.

7. The method according to at least one of the preceding claims,
**characterized in**
**that** the polymer material used is one which has a thermoplastic fluoropolymer, wherein in particular an ethylene tetrafluoroethylene copolymer, preferably exclusively, or an ethylene tetrafluoro ethylene copolymer and a high-temperature thermoplastic, preferably polyphenylene sulphide, polyether ether ketone, polyethersulphone and/or polyamidimide, is used as the polymer material, and/or wherein a high-temperature thermoplastic, preferably polyphenylene sulphide, polyether ether ketone, polyethersulphone or polyamidimide, is used as the polymer material, preferably exclusively.

8. The method according to at least one of the preceding claims,
**characterized in**
**that** the metal first material used is one which contains at least one metal from the group copper, nickel, chromium, tin, molybdenum, iron.

9. The method according to at least one of the preceding claims,
**characterized in**
**that** the first part component (140) is at least partly overmoulded by the second part component (142) and/or the latter is injected into the first part component.

10. The method according to at least one of the preceding claims,
**characterized by** the method steps:
- producing the first part component (140) having at least one receptacle (28, 34, 36, 42, 44, 46, 48, 54, 56, 58, 74, 76) by injection moulding or by pressing of the first material and sintering,
- filling in the at least one receptacle by means of injection moulding of a mixture containing carbon and binder or of a plastic for producing a green body, and
- optional subsequent heat treatment and/or mechanical treatment,
wherein the mixture of carbon and binder is preferably injected at a temperature T of 300 °C ≤ T ≤ 370 °C, and/or the first part component (140) produced by means of injection moulding is sintered at a temperature T of 800 °C ≤ T ≤ 1360 °C and preferably over a time t of 30 min ≤ 60 min.

11. A part (38, 50, 62, 72, 138), preferably a sintered part, in particular a rotationally symmetrical part such as in particular a bearing, plain bearing, gear, pinion, belt wheels, pump wheels, or a part having a linearly or otherwise shaped sliding surface with at least one functional area, in particular an area to be tribologically, thermally and/or mechanically stressed, such as a bearing, in particular a plain bearing or a gear, in particular produced according to at least one of the preceding claims, wherein the part has a first part element (140) made of a metal first material and a second part element (142) made of a carbon-containing or carbon-based second material or consisting thereof, wherein the first part element has in the functional area at least one receptacle (28, 34, 36, 42, 44, 46, 48, 54, 56, 58, 74, 76) having at least one undercut and filled in by the second part element by means of injection moulding,
**characterized in**
**that** the at least one receptacle (28, 34, 36, 42, 44, 46, 48, 54, 56, 58, 74 76) varies in its width in the axis direction of the part (38, 50, 62, 72, 138), or in that the receptacles are limited by obliquely extending webs (108, 110) and extend in the circumferential direction alternatingly and unidirectionally angled relative to the longitudinal axis of the part, such that the second material, inserted by injection and forming strips (112, 114) likewise extending obliquely to the longitudinal axis of the part towards the surface, extends between the receptacles.

12. The part according to claim 11,
**characterized in**
**that** several receptacles (28, 34, 36, 42, 44, 46, 48, 54, 56, 58, 74, 76) filled in with the second part element (142) are provided in the functional area, wherein the second part element (142) is preferably formed by a second material inserted into several receptacles (28, 34, 36, 42, 44, 46, 48, 54, 56, 58, 74, 76), wherein preferably in the case of several receptacles (28, 34, 36, 42, 44, 46, 48, 54, 56, 58, 74, 76) having in section a dovetailed undercut geometry, adjacent receptacles have widths extending in opposing directions or the same widths, and/or in the case of several receptacles (28, 34, 36, 42, 44, 46, 48, 54, 56, 58, 74, 76) having in section a dovetailed undercut geometry, adjacent receptacles expand outwards or taper inwards along an or the axis or show a helical geometry.

13. The part according to at least one of claims 11 or 12,
**characterized in**
**that** the functional area is a section or several sections of an envelope extending rotationally symmetrically to an axis.

14. The part according to at least one of claims 11 to 13,
**characterized in**
**that** the at least one receptacle (28, 34, 36, 42, 44, 46, 48, 54, 56, 58, 74, 76) preferably has, in a section vertical to the axis, a dovetailed undercut geometry, and/or in that the width of the receptacle (28, 34, 36, 42, 44, 46, 48, 54, 56, 58, 74, 76) continuously changes in the axis direction.

15. The part according to at least one of claims 11 to 14,
**characterized in**
**that** the second part element (140) on the surface side merges flush into the adjoining area of the first part element (142) or is larger or smaller in size relative thereto, and/or the second part element (142) envelopes at least in some sections the first part element (140) on the outside and/or on the inside.

## Revendications

1. Procédé de fabrication d'une pièce (38, 50, 62, 72, 138), notamment d'une pièce présentant une symétrie de rotation, notamment palier, palier lisse, roue dentée, pignon, poulies, impulseurs, ou pièce avec surface de glissement linéaire ou d'autre forme avec une zone fonctionnelle, notamment une zone à solliciter de manière tribologique, thermique et/ou mécanique, comprenant un premier composant de pièce (140) en un premier matériau métallique et un second composant de pièce (142) en un second matériau constitué ou contenant du carbone, avec les étapes de procédé suivantes :
- fabrication du premier composant de pièce (140) avec au moins un logement formé dans la zone fonctionnelle,
- fabrication du second composant de pièce (142) par moulage par injection du second matériau au moins dans ledit au moins un logement,
**caractérisé en ce**
**que** ledit au moins un logement (28, 34, 36, 42, 44, 46, 48, 54, 56, 58, 74, 76) est formé de telle sorte que la largeur varie le long de l'axe longitudinal, ou que les logements sont délimités par des nervures (108, 110) s'étendant en biais et, dans la direction circonférentielle, s'étendent alternativement en étant inclinés dans le même sens par rapport à l'axe longitudinal de la pièce de sorte que s'étend, entre les logements, le second matériau mis en place par injection, qui forme des bandes (112, 114) s'étendant aussi en biais vers la surface par rapport à l'axe longitudinal de la pièce.

2. Procédé selon la revendication 1,
**caractérisé en ce**
**que** le premier composant de pièce (140) est fabriqué par moulage primaire ou formage, tel que procédé de fabrication additive, pressage, notamment pressage axial ou isostatique, ou par injection de poudre métallique et par frittage après un éventuel déliantage préalable.

3. Procédé selon la revendication 1 ou 2,
**caractérisé en ce**
**que** ledit au moins un logement (28, 34, 36, 42, 44, 46, 48, 54, 56, 58, 74, 76) est formé avec une contredépouille délimitée par une ouverture, pour l'imperdabilité du second composant de pièce, ou que le logement (28, 34, 36, 42, 44, 46, 48, 54, 56, 58, 74, 76) est formé avec un axe longitudinal, sachant que le logement présente transversalement à l'axe longitudinal du logement une géométrie de contredépouille avec une ouverture qui est au moins partiellement plus petite que la section maximale du logement, considérée respectivement transversalement à l'axe longitudinal du logement.

4. Procédé selon au moins l'une des revendications précédentes,
**caractérisé en ce**
**que** plusieurs logements (28, 34, 36, 42, 44, 46, 48, 54, 56, 58, 74, 76) sont formés avec une géométrie de contredépouille, notamment avec un géométrie de contredépouille en forme de queue d'aronde, sachant que des logements adjacents sont formés de sorte à varier de manière inverse dans leur largeur respective ou de rester identiques ou sont formés sous forme d'hélice.

5. Procédé selon au moins l'une des revendications précédentes,
**caractérisé en ce**
**qu'**est utilisé comme second matériau un matériau basé sur ou contenant du carbone ou un plastique moulable par injection, sachant qu'est utilisé, de préférence, comme matériau basé sur ou contenant du carbone, un matériau polymère rempli de carbone ou comme matériau carbone du graphite, un solide contenant principalement du carbone, du coke de pétrole ou un mélange de ces substances, ou qu'est utilisé comme second matériau un matériau qui présente une part de polymère thermoplastique comprise entre 30 vol.-% et < 60 vol.-.% et une part de carbone comprise entre 40 vol.-% à 70 vol.-%.

6. Procédé selon au moins l'une des revendications précédentes,
**caractérisé en ce**
**qu'**est utilisé comme second matériau un matériau qui est exempt de polytétrafluoréthylène ou de PTFE pur et/ou qu'est utilisé comme liant pour le second matériau au moins un polymère thermoplastique et/ou duroplastique.

7. Procédé selon au moins l'une des revendications précédentes,
**caractérisé en ce**
**qu'**est utilisé comme matériau polymère un matériau qui présente un fluoropolymère thermoplastique, sachant qu'est utilisé, notamment comme matériau polymère, de préférence exclusivement un copolymère d'éthylène-tétrafluoroéthylène, ou copolymère d'éthylène-tétrafluoroéthylène et un thermoplastique haute température, de préférence du sulfure de polyphénylène, du polyétheréthercétone, du polyéthersulfone et/ou du polyamide-imide,et/ou sachant qu'est utilisé comme matériau polymère, de préférence exclusivement, un thermoplastique haute température, de préférence du sulfure de polyphénylène, du polyétheréthercétone, du polyéthersulfone ou du polyamide-imide.

8. Procédé selon au moins l'une des revendications précédentes,
**caractérisé en ce**
**qu'**est utilisé comme premier matériau métallique un matériau qui contient au moins un métal appartenant au groupe du cuivre, nickel, chrome, étain, molybdène, fer.

9. Procédé selon au moins l'une des revendications précédentes,
**caractérisé en ce**
**que** le premier composant de pièce (140) est au moins partiellement surmoulé par le second composant de pièce (142) et/ou est injecté dans le premier composant de pièce.

10. Procédé selon au moins l'une des revendications précédentes,
**caractérisé par** les étapes suivantes :
- fabrication du premier composant de pièce (140) présentant au moins un logement (28, 34, 36, 42, 44, 46, 48, 54, 56, 58, 74, 76) par moulage par injection ou pressage du premier matériau et frittage,
- remplissage dudit au moins un logement au moyen du moulage par injection d'un mélange contenant du carbone ou un liant ou d'un plastique pour fabriquer un compact vert, et
- évent. traitement thermique et/ou traitement mécanique consécutifs,
sachant que de préférence, le mélange carbone-liant est injecté à une température T où 300 °C ≤ T ≤ 370 °C et/ou sachant que le premier composant de pièce (140) fabriqué par moulage par injection est fritté à une température T où 800 °C ≤ T ≤ 1360 °C et de préférence, pendant une durée t où 30 min ≤ t ≤ 60 min.

11. Pièce (38, 50, 62, 72, 138), de préférence pièce frittée, notamment pièce présentant une symétrie de rotation, telle que palier, palier lisse, roue dentée, pignon, poulies, impulseurs, ou pièce avec surface de glissement linéaire ou d'autre forme avec une zone fonctionnelle, notamment une zone à solliciter de manière tribologique, thermique et/ou mécanique, tel que palier, notamment palier lisse, roue dentée, fabriquée notamment selon au moins l'une des revendications précédentes, sachant que la pièce présente un premier corps de pièce (140) en un premier matériau métallique et un second corps de pièce (142) en un second matériau contenant du carbone ou à base de carbone, ou étant constitué de celui-ci, sachant que le premier corps de pièce présente, dans la zone fonctionnelle, au moins un logement (28, 34, 36, 42, 44, 46, 48, 54, 56, 58, 74, 76) présentant au moins une contredépouille, lequel logement est rempli par le second corps de pièce par moulage par injection,
**caractérisée en ce**
**que** ledit au moins un logement (28, 34, 36, 42, 44, 46, 48, 54, 56, 58, 74 76) varie en largeur dans le sens de l'axe de la pièce (38, 50, 62, 72, 138) ou que les logements sont délimités par des nervures (108, 110) s'étendant en biais et s'étendent alternativement en étant inclinés dans le même sens par rapport à l'axe longitudinal de la pièce de sorte que s'étend entre les logements le second matériau mis en place par injection, qui forme des bandes (112, 114) s'étendant aussi en biais, vers la surface, par rapport à l'axe longitudinal de la pièce.

12. Pièce selon la revendication 11,
**caractérisée en ce**
**que** plusieurs logements (28, 34, 36, 42, 44, 46, 48, 54, 56, 58, 74, 76) remplis du second corps de pièce (142) sont prévus dans la zone fonctionnelle, sachant que de préférence, le second corps de pièce (142) est formé par un second matériau mis en place dans plusieurs logements (28, 34, 36, 42, 44, 46, 48, 54, 56, 58, 74, 76), sachant que de préférence, dans le cas de plusieurs logements (28, 34, 36, 42, 44, 46, 48, 54, 56, 58, 74, 76) présentant en coupe une géométrie de contredépouille en queue d'aronde, des logements adjacents présentent des largeurs s'étendant en sens inverse ou des largeurs identiques, et/ou, dans le cas de plusieurs logements (28, 34, 36, 42, 44, 46, 48, 54, 56, 58, 74, 76) présentant en coupe une géométrie de contredépouille en queue d'aronde, des logements adjacents s'élargissent ou se rétrécissent de manière conique le long d'un axe ou de l'axe, ou présentent une géométrie hélicoïdale.

13. Pièce selon au moins l'une des revendications 11 ou 12,
**caractérisée en ce**
**que** la zone fonctionnelle est une section ou plusieurs sections d'une enveloppe s'étendant par symétrie de rotation par rapport à un axe.

14. Pièce selon au moins l'une des revendications 11 à 13,
**caractérisée en ce**
**que** ledit au moins un logement (28, 34, 36, 42, 44, 46, 48, 54, 56, 58, 74, 76) présente de préférence une géométrie de contredépouille en queue d'aronde en coupe perpendiculaire par rapport à l'axe, et/ou que la largeur du logement (28, 34, 36, 42, 44, 46, 48, 54, 56, 58, 74, 76) varie continuellement dans le sens de l'axe.

15. Pièce selon au moins l'une des revendications 11 à 14,
**caractérisée en ce**
**que** le second corps de pièce (140) affleure, côté surface, la zone adjacente du premier corps de pièce (142), ou présente par rapport à celle-ci une surépaisseur ou une sous-épaisseur, et/ou que le second corps de pièce (142) entoure au moins par sections le premier corps de pièce (140) sur son côté extérieur et/ou intérieur.
